# EUROPÄISCHE PATENTSCHRIFT

(11) **EP 4 090 869 B1**
(45) Veröffentlichungstag und Bekanntmachung des Hinweises auf die Patenterteilung: **13.03.2024**
(21) Anmeldenummer: 20817314.6
(22) Anmeldetag: 01.12.2020
(51) Int. Cl.: F16K 7/12, F16K 27/02, F16K 11/052

(54) **VENTILKÖRPER UND MEMBRANVENTIL**
VALVE BODY AND DIAPHRAGM VALVE
CORPS DE VANNE ET VANNE À DIAPHRAGME

(30) Priorität: 14.01.2020 DE 102020100745; 14.01.2020 DE 102020100744
(43) Veröffentlichungstag der Anmeldung: 23.11.2022
(73) Patentinhaber: GEMÜ Gebr. Müller Apparatebau GmbH & Co. Kommanditgesellschaft, 74653 Ingelfingen (DE)
(72) Erfinder: HAIDT, Harald, 74613 Öhringen (DE)
(74) Vertreter: DREISS Patentanwälte PartG mbB
(86) Internationale Anmeldenummer: PCT/EP2020/084149
(87) Internationale Veröffentlichungsnummer: WO 2021/144060

(56) Entgegenhaltungen:
- US-A- 2 716 017
- US-A- 3 011 758
- US-A1- 2010 140 524
- US-A1- 2015 129 790
- US-A1- 2015 167 853

## Beschreibung

Die Erfindung betrifft einen Ventilkörper und ein Membranventil.

US2015129790A1 offenbart ein Ventil mit einem Ventilgehäuse mit einem ersten Anschluss und einem zweiten Anschluss und das Ventil besitzt ein entlang einer axialen Richtung bewegliches Schließglied. In einer geschlossenen Stellung wirkt das Schließelement abdichtend mit einem Ventilsitz zusammen, um eine Fluidverbindung zwischen dem ersten und dem zweiten Anschluss zu blockieren. Eine fluidundurchlässige Membran umfasst eine zentrale Öffnung, durch die sich eine Schließgliedanordnung mit dem Schließglied erstreckt, und einen Klemmabschnitt, der in einem Klemmspalt verläuft. Die Membrane wird zwischen der Schließgliedanordnung und einer Halteanordnung am Gehäuse dichtend gehalten. Die Membrane hat einen ersten Abschnitt und einen an den ersten Abschnitt anschließenden zweiten Abschnitt. Der erste Abschnitt ist in der Halteanordnung kraftschlüssig gehalten, der zweite Abschnitt ist in der Halteanordnung geführt, wobei der erste und der zweite Abschnitt in einem Winkel zueinander angeordnet sind. Durch den ersten Abschnitt, den zweiten Abschnitt und die Halteanordnung wird ein Formschluss erzeugt.

US2716017A offenbart ein Membranventil mit einem Körper mit einem im wesentlichen geraden Durchgang und einer Öffnung an einem Seitenteil desselben. Ein Staukörper erstreckt sich auf der der Öffnung gegenüberliegenden Seite des Körpers über den Durchgang und weist eine Oberfläche auf, die einen Membransitz bildet. Die Enden des Membransitzes gehen in den Rand der Öffnung an Punkten über, die eine Linie definieren, die nach innen von einer zweiten Linie beabstandet ist, die durch Punkte auf dem Rand der Öffnung verläuft, wobei die zweite Linie zusammen mit der Längsachse des Durchgangs eine Ebene senkrecht zu der ersten Linie bildet. Das Ventil umfasst eine Haube, deren eines Endes komplementär zu dem Rand der Körperöffnung ist und die an dem Körper befestigt ist. Das Ventil umfasst eine Membran, deren Rand zwischen dem Rand und dem Ende der Haube eingeklemmt ist, und Mittel, die innerhalb der Haube getragen werden und der Membran zugeordnet sind, um letztere in und aus dem Sitzeingriff mit dem Staukörper zu bewegen.

US2015167853A1 offenbart ein langlebiges Membranventil mit einer eine einschichtigen Struktur, die aus Gummimaterialien besteht. Die einschichtige Struktur hat einen Membranteil, der sich beim Öffnen und Schließen eines Strömungskanals verformt und auf- und abbewegt, und einen Flanschteil, der um den Membranteil herum vorgesehen ist und zwischen einem Ventilkörper und einer Haube liegt. Das Flanschteil hat einen ringförmigen Steg, der aus einem oberen Steg besteht, der nach oben vorsteht, und einem unteren Steg, der von einer dem oberen Steg entsprechenden Position nach unten vorsteht. Der obere Steg hat einen inneren oberen Steg und einen äußeren oberen Steg, dessen vorspringende Höhe niedriger ist als der innere obere Steg, die nacheinander in einem Treppenmuster ausgebildet sind.

US3011758A offenbart ein Ventil, umfassend einen Körper mit einem Ventilsitz, einer Haube und einer Membran, deren peripherer Teil im Wesentlichen flach ist und zwischen gegenüberliegenden Flächen des Körpers und der Haube liegt, wobei die Membran aus chemisch beständigem, organischem, synthetischem, polymerem Kunststoffmaterial besteht, das eine ausreichende Flexibilität aufweist, um als Membran zu fungieren, dessen Steifigkeit und Unflexibilität jedoch ausreichend größer ist als die von Elastomerkautschuk, so dass aus solchem Kunststoffmaterial hergestellte Membranen bei wiederholter Biegung rasch Risse entwickeln.

Aus der US 2010/0140524 A1 ist ein Membranventil mit einem Funktionsbereich und einen den Funktionsbereich umgebenden Befestigungsabschnitt bekannt.

Es ist bekannt, dass Membrane für Membranventile einem Verschleiß unterliegen. Dieser Verschleiß erhöht aufgrund der verringerten Lebensdauer die Wartungs- und Tauschzyklen der Membran.

Aufgabe der Erfindung ist es deshalb, den Verschleiß einer Membran eines Membranventils zu reduzieren und damit die Lebensdauer der Membran zu erhöhen.

Die der Erfindung zugrundeliegende Aufgabe wird durch einen Ventilkörper gemäß Anspruch 1 und durch ein Membranventil gemäß Anspruch 7 gelöst. Vorteilhafte Weiterbildungen sind in den Unteransprüchen angegeben und finden sich in der Beschreibung sowie in der Zeichnung.

Ein erster Aspekt der Beschreibung betrifft eine Membran für ein Membranventil, wobei die Membran einen Funktionsbereich und einen den Funktionsbereich umgebenden Befestigungsabschnitt aufweist, wobei der Funktionsbereich in einem entspannten Zustand umfasst: einen zentralen Abschnitt, welcher auf einer Nassseite der Membran hervorsteht; einen lateralen Abschnitt, welcher auf einer Trockenseite der Membran hervorsteht, wobei der laterale Abschnitt wenigstens abschnittsweise in Richtung der Trockenseite der Membran gewölbt ist; und einen zwischen dem zentralen Abschnitt und dem lateralen Abschnitt angeordneten Zwischenabschnitt, welcher wenigstens abschnittsweise in Richtung der Nassseite der Membran gewölbt ist.

Durch die gegensätzliche Wölbung des Zwischenabschnitts und des lateralen Abschnitts wird ein schonendes Abrollen bzw. Walken des Funktionsbereichs - insbesondere nach außen hin - ermöglicht. Darüber hinaus stellt der entspannte Zustand eine entspannte Zwischenposition zwischen einer geöffneten und einer geschlossenen Stellung der Membran dar. Damit werden bei der Bewegung entstehende Materialspannungen reduziert. Insbesondere wird hierdurch ein Abknicken der Membran während eines Stellvorgangs verhindert. Das Abknicken wird dadurch verhindert, dass radiale Stauchungen und radiale Dehnungen des Materials reduziert werden. Vielmehr wird eine materialschonende Roll- bzw. Walkbewegung der Membran ermöglicht. Die Lebensdauer der Membran wird erhöht und gleichzeitig werden die Wartungszyklen verlängert.

Ein vorteilhaftes Beispiel zeichnet sich dadurch aus, dass eine Membrandicke in einem Bereich umfassend den Zwischenabschnitt und den lateralen Abschnitt in Richtung des Befestigungsabschnitts wenigstens abschnittsweise abnimmt.

Vorteilhaft wird die Abroll- bzw. Walkbewegung der Membran im Randbereichs des Funktionsbereichs der Membran durch die Dickenreduzierung unterstützt.

Ein vorteilhaftes Beispiel zeichnet sich dadurch aus, dass der Zwischenabschnitt zumindest abschnittsweise einem Kreisbogen mit einem ersten Radius folgt.

Ein vorteilhaftes Beispiel zeichnet sich dadurch aus, dass der laterale Abschnitt zumindest abschnittsweise einem Kreisbogen mit einem zweiten Radius folgt, und wobei der zweite Radius kleiner ist als der erste Radius.

Durch diese Radiusreduktion nach außen hin wird bewirkt, dass die Membran in die Walkbewegung gezwungen wird.

Ein vorteilhaftes Beispiel zeichnet sich dadurch aus, dass ein Verhältnis des zweiten Radius zu dem ersten Radius zwischen 0,40 und 0,85, insbesondere zwischen 0,55 und 0,75 liegt.

Durch dieses Mindestmaß des zweiten Radius wird die Membran in die gewünschte Walkbewegung mit möglichst großem Walkradius im Bereich des lateralen Abschnitts gezwungen. Ein Umschnappen des lateralen Bereichs beim Abziehen der Membran vom Ventilsitz wird verhindert.

Ein vorteilhaftes Beispiel zeichnet sich dadurch aus, dass der erste Radius in einem Bereich größer 1/10-tel eines Sitzdurchmessers, insbesondere in einem Bereich zwischen 1/17-tel und 1/5-tel des Sitzdurchmessers, und insbesondere in einem Bereich zwischen 1/11-tel und 1/7-tel des Sitzdurchmessers, liegt, folgt.

Damit ist der laterale Bereich derart auf den Sitzdurchmesser abgestimmt, als dass die Membran in eine Bewegung gezwungen wird, bei der ein minimaler Walkradius des lateralen Bereichs, der abhängig von dem verwendeten Material und der Dicke der Membran ist, nicht unterschritten wird. Hierdurch werden die Belastungen des Materials der Membran reduziert.

Ein vorteilhaftes Beispiel zeichnet sich dadurch aus, dass der entspannte Zustand der Membran einer unbelasteten Zwischenstellung der Membran, welche sich zwischen einer geöffneten Stellung und einer geschlossenen Stellung befindet, entspricht.

Vorteilhaft verringern sich durch die Herstellung in der unbelasteten Zwischenstellung die radial auftretenden Zug- und Druckkräfte beim Stellen der Membran, was die Lebensdauer der Membran verlängert.

Ein vorteilhaftes Beispiel zeichnet sich dadurch aus, dass der zentrale Abschnitt einen nassseitigen Dichtsteg umfasst.

Ein vorteilhaftes Beispiel zeichnet sich dadurch aus, dass der Dichtsteg in einem Schnitt lotrecht zu seinem Verlauf von zwei Ausnehmungen umgeben ist.

Der derart freigelegte Dichtsteg verbessert den Schließvorgang.

Ein vorteilhaftes Beispiel zeichnet sich dadurch aus, dass eine nassseitige Kontur des Zwischenabschnitts rotationssymmetrisch zu einer Stellachse ausgebildet ist, und wobei der Dichtsteg in die rotationssymmetrisch ausgebildete nassseitige Kontur übergeht.

Vorteilhaft kann zum einen zentral eine genügende Kraft auf den Dichtsteg des Ventilkörpers ausgebracht werden. Zum anderen ermöglicht der Übergang des Dichtstegs in den rotationssymmetrisch ausgebildeten Zwischenabschnitt, dass sich zum lateralen Abschnitt hin die Randfaserdehnungen reduzieren.

Ein zweiter Aspekt dieser Beschreibung betrifft ein Membranventil umfassend eine Membran gemäß dem ersten Aspekt, wobei die Membran zwischen einem Ventilkörper und einem Antriebskörper verspannt ist.

Ein vorteilhaftes Beispiel zeichnet sich dadurch aus, dass eine Länge einer Längsschnittkontur des Funktionsbereichs der Membran kürzer, insbesondere zwischen 1-4% kürzer, insbesondere zwischen 2-3% kürzer ist, als eine Längsschnittkontur des Dichtstegs des Ventilkörpers. Vorteilhaft wird durch diese Längsschnittkonturabstimmung unterstützt, dass der minimale Walkradius im lateralen Bereich des Funktionsbereichs nicht unterschritten wird.

Ein vorteilhaftes Beispiel zeichnet sich dadurch aus, dass der Ventilkörper einen Befestigungsabschnitt für die Membran umfasst, wobei innerhalb des Befestigungsabschnitts ein Dichtsteg zum Zusammenwirken mit dem Funktionsbereich der Membran angeordnet ist, wobei eine Dichtkontur des Dichtstegs des Ventilkörpers zwei in einem Längsschnitt des Dichtstegs konvex gewölbte Anlageabschnitte umfasst, welche sich jeweils nach innen gewandt an den Befestigungsabschnitt anschließen.

Ein dritter erfindungsgemäßer Aspekt dieser Beschreibung betrifft einen Ventilkörper für ein Membranventil, wobei der Ventilkörper einen Befestigungsabschnitt für eine Membran umfasst, wobei innerhalb des Befestigungsabschnitts ein Dichtsteg zum Zusammenwirken mit einem Funktionsbereich der Membran angeordnet ist, wobei eine Dichtkontur des Dichtstegs zwei in einem Längsschnitt des Dichtstegs konvex gewölbte Anlageabschnitte umfasst, welche sich jeweils nach innen gewandt an den Befestigungsabschnitt anschließen.

Der konvexe Anlageabschnitt verhindert, dass die Membran bei einer Bewegung knickt. Vielmehr bewirkt der Anlageabschnitt insbesondere beim Wegziehen vom Ventilsitz, dass die Membran in eine Roll- bzw. Walkbewegung übergeht, was das Material der Membran im radial äußeren Bereich schont. Damit wird die Membran weniger stark belastet. Darüber hinaus erlaubt die vorgeschlagene Dichtkontur ein gleichmäßigeres Verpressen der Membran über die Dichtkontur hinweg. Folglich erhöht sich die Lebensdauer der Membran gleich in mehrfacher Hinsicht.

Die Sitzgeometrie begrenzt zwar eine im Vergleich zum Stand der Technik kleinere Querschnittsfläche. Allerdings ermöglicht die vorgenannte Abrollbewegung und die sich daraus ergebende Reduktion der Membranbelastung, dass der Ventilhub vergrößert werden kann. Der vergrößerte Ventilhub überkompensiert sogar die kleinere Sitzschnittfläche dahingehend, als dass sich im Vergleich zum Stand der Technik ein größerer Öffnungsquerschnitt des Ventils einstellt. Entsprechend sind vergleichsweise größere Durchflussmengen stellbar.

Ein vorteilhaftes Beispiel zeichnet sich dadurch aus, dass der konvex gewölbte Anlageabschnitt zumindest abschnittsweise einem Kreisbogen, dessen Radius in einem Bereich größer 1/10-tel eines Sitzdurchmessers, insbesondere in einem Bereich zwischen 1/17-tel und 1/5-tel des Sitzdurchmessers, und insbesondere in einem Bereich zwischen 1/11-tel und 1/7-tel des Sitzdurchmessers, liegt, folgt.

Vorteilhaft stellt dieser Wertebereich für den Radius des konvex gekrümmten Anlageabschnitts eine membranschonende und die Abrollbewegung unterstützende Sitzkontur bereit. Ein minimaler Roll- bzw. Walkradius im Längsschnitt der Membran wird bei der Bewegung der Membran nicht unterschritten, womit die Membran nicht geknickt wird, sondern die Membran vielmehr - beispielsweise beim Öffnen des Ventils - in eine Rollbewegung übergeht. Die Öffnungsbewegung stellt grundsätzlich eine große Belastung für die Membran dar, da eine Druckstückkontur diesen Vorgang nur bedingt unterstützen kann. Der gewählte Radius für den konvex gewölbten Anlageabschnitt entschärft die vorgenannte Belastungsproblematik.

Erfindungsgemäß schließt eine gedachte Tangente der Dichtkontur in einem Krümmungsänderungspunkt mit einer Stellachse einen Winkel im Bereich zwischen 40° und 52°, insbesondere in einem Bereich zwischen 44° und 50°, und insbesondere in einem Bereich zwischen 47° und 49°, ein.

Vorteilhaft wird durch diese gedachte Tangente ein Ventilsitz bereitgestellt, der zum einen eine erhöhte Sitztiefe ermöglicht und gleichzeitig noch eine genügende Anpressung der Membran an den Ventilsitz erlaubt, um sich Membranventil sicher geschlossen zu halten.

Ein vorteilhaftes Beispiel zeichnet sich dadurch aus, dass der konvex gekrümmte Anlageabschnitt lotrecht zu einer Stellachse zwischen 1/20-tel und 1/5-tel des Sitzdurchmessers des Dichtstegs, insbesondere zwischen 1/15-tel und 1/6-tel des Sitzdurchmessers, einnimmt.

Vorteilhaft ragt der konvexe Anlageabschnitt damit so weit in die Ventilsitzöffnung hinein, als dass das Abrollen der Membran vorteilhaft unterstützt wird.

Ein vorteilhaftes Beispiel zeichnet sich dadurch aus, dass wenigstens ein in dem Längsschnitt des Dichtstegs konkav gewölbter Anlageabschnitt der Dichtkontur sich nach innen an den jeweiligen konvex gewölbten Anlageabschnitt anschließt, wobei der konkav gewölbte Abschnitt geringer gekrümmt ist als der konvex gewölbte Abschnitt.

Vorteilhaft geht der konvex gewölbte Anlageabschnitt in den konkav gewölbten Anlageabschnitt über und ermöglicht so ein durchgängiges Aufpressen der Membran auf den Dichtsteg. Die geringer ausgeprägte Krümmung des konkav gewölbten Abschnitts stellt sicher, dass ein genügend großer Durchflussquerschnitt bereitgestellt wird.

Ein vorteilhaftes Beispiel zeichnet sich dadurch aus, dass ein Krümmungsmittelpunkt des konvex gewölbten Abschnitts und ein Krümmungsmittelpunkt des konkav gewölbten Abschnitts auf einer gedachten gemeinsamen Linie liegen, welche mit der Stellachse einen Winkel in einem Bereich zwischen 45° und 70°, insbesondere in einem Bereich zwischen 65° und 50°, einschließt.

Ein fünfter Aspekt dieser Beschreibung betrifft eine Membran für ein Membranventil, die Teil der Erfindung ist, wenn sie Teil eines erfindungsgemäßen Membranventils ist, wobei die Membran einen Befestigungsabschnitt umfasst, wobei innerhalb des Befestigungsabschnitts ein Funktionsbereich zum Zusammenwirken mit einem Dichtsteg eines Ventilkörpers angeordnet ist, wobei eine in einem Schließzustand der Membran ausgebildete Schließkontur des Funktionsbereichs zwei in einem Längsschnitt des Funktionsbereichs konkav gewölbte Anlageabschnitte umfasst, welche sich jeweils nach innen gewandt an den Befestigungsabschnitt anschließen.

Ein sechster erfindungsgemäßer Aspekt dieser Beschreibung betrifft ein Membranventil umfassend den Ventilkörper gemäß einem der Ansprüche 1 bis 6 und eine Membran gemäß dem fünften Aspekt.

Ein vorteilhaftes Beispiel des Membranventils zeichnet sich dadurch aus, dass in einem geschlossenen Zustand des Membranventils die konkav gewölbten Anlageabschnitte der Membran jeweils an dem zugeordneten konvex gewölbten Anlageabschnitt des Ventilkörpers anliegen.

In der Zeichnung zeigen:
- Figur 1: einen Teil eines Membranventils in einer Explosionsansicht;
- Figur 2: einen schematischen Längsschnitt eines Dichtstegs eines Ventilkörpers;
- Figuren 3 und 4: jeweils einen Längsschnitt einer Membran;
- Figur 5: in einem schematischen Schnitt eine Membran und einen zugeordneten Ventilkörper;
- Figur 6: verschiedene Stellungen der Membran in schematischer Form;
- Figur 7: einen schematischen Querschnitt eines zentralen Abschnitts der Membran; und
- Figur 8: eine Sicht auf eine Nassseite der Membran.

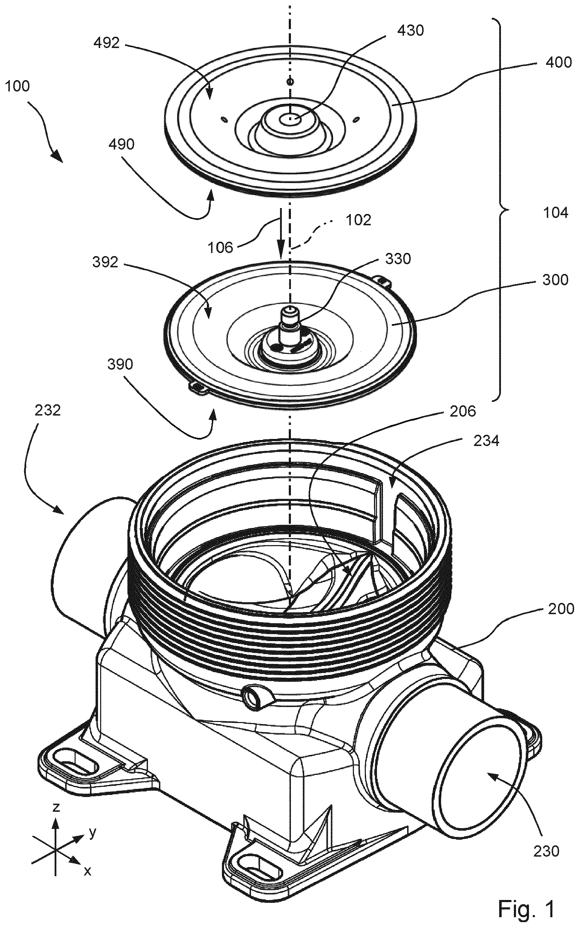

Figur 1 zeigt einen Teil eines Membranventils 100 in einer Explosionsansicht. Entlang einer Stellachse 102 sind ein Ventilkörper 200, eine erste Membran 300 und eine zweite Membran 400 dargestellt. Die beiden Membranen 300 und 400 bilden eine zweiteilige Membrananordnung 104, wobei die erste Membran 300 als Membranschild und die Membran 400 als Stützmembran bezeichenbar sind. Die Membran 300, 400 umfasst eine Nassseite 390, 490 und eine Trockenseite 392, 492, wobei die Trockenseite 392, 492 von dem Ventilkörper 200 abgewandt ist, und wobei die Nassseite 390, 490 dem Ventilkörper 200 zugewandt ist.

In einem Beispiel umfasst die erste Membran 300 Polytetrafluorethylen, PTFE, oder ein Perfluoralkoxy-Polymer, PFA, und die zweite Membran 400 umfasst ein Elastomer wie beispielsweise ein vulkanisierter Ethylen-Propylen-DienKautschuk, EPDM. In einem anderen Beispiel sind die Materialen anders gewählt. In einem weiteren Beispiel wird nur eine einzige Einfachmembran umfassend PTFE, PFA oder EPDM verwendet.

Ein Pin 330, der mit der ersten Membran 300 fest verbunden ist, ist durch eine zentrale Öffnung 430 der zweiten Membran 400 geführt und ist mit einer nicht gezeigten Ventilstange verbunden. Die Ventilstange wird von einem nicht gezeigten Antrieb angetrieben, um die Membran 330 entlang der Stellachse 102 zu bewegen.

Der Ventilkörper 200 umfasst zwei Prozessfluidanschlüsse 230, 232. Von dem jeweiligen Prozessfluidanschluss 230, 232 führt ein jeweiliger Fluidkanal bis zu einem Dichtsteg 206, der über eine Öffnung 234 des Ventilkörpers 200 zugänglich ist.

Die Ventilanordnung 104 wird in die Öffnung 234 eingeführt und in einem jeweiligen lateralen Befestigungsabschnitt zwischen dem Ventilkörper 200 und einem Antriebskörper fluiddicht verspannt. In eine Stellrichtung 106 drückt der Antrieb die Membrananordnung 104 auf den Dichtsteg 206, um einen Fluidfluss zwischen den Fluidkanälen zu verhindern. Bei einem Abheben der Membrananordnung 104 von dem Dichtsteg 206 wird ein Öffnungsquerschnitt freigegeben, der den Fluidfluss zwischen den beiden Fluidkanälen erlaubt.

Vorliegend umfasst die Membrananordnung 104 eine Anzahl von zwei Membrane 300, 400. Die in dieser Beschreibung offenbarten Aspekte lassen sich selbstverständlich auch auf Membrananordnungen mit einer einzigen Membran oder mehr als zwei Membranen übertragen.

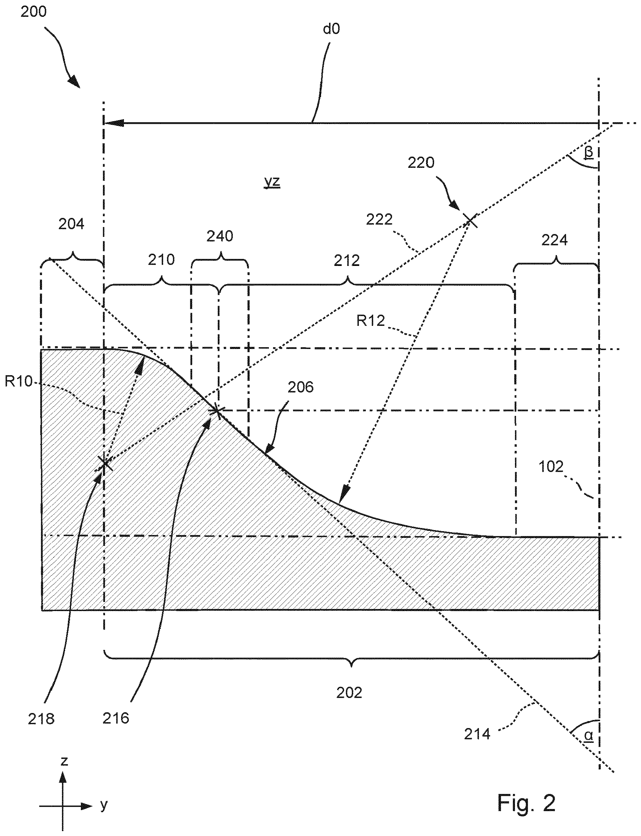

Figur 2 zeigt einen schematischen Längsschnitt des Dichtstegs 206 des Ventilkörpers 200. Der Dichtsteg 206 ist spiegelsymmetrisch zur Stellachse 102 aufgebaut, weshalb in Figur 2 nur eine Hälfte des Ventilkörpers 200 gezeigt ist.

Der Ventilkörper 200 umfasst einen äußeren Befestigungsabschnitt 204 zum Anliegen der Membran 300 aus Figur 1 und zum Verspannen der Membrananordnung 104 aus Figur 1. Innerhalb des Befestigungsabschnitts 204 ist der Dichtsteg 206 zum Zusammenwirken mit einem Funktionsbereich der Membrane 300, 400 angeordnet.

Eine Dichtkontur des Dichtstegs 206 umfasst zwei in einem Längsschnitt yz des Dichtstegs 260 konvex gewölbte Anlageabschnitte 210, welche sich jeweils nach innen und in Richtung der Stellachse 102 gewandt an den zugeordneten Befestigungsabschnitt 204 anschließen. Die Dichtkontur des Dichtstegs 206 verläuft entlang einer Oberfläche des Dichtstegs 206 und bezieht sich auf den Längsschnitt yz des Dichtstegs 206.

Der konvex gewölbte Anlageabschnitt 210 folgt zumindest abschnittsweise einem Kreisbogen, dessen Radius R10 in einem Bereich größer 1/10-tel eines Sitzdurchmessers d0, insbesondere in einem Bereich zwischen 1/17-tel und 1/5-tel des Sitzdurchmessers d0, und insbesondere in einem Bereich zwischen 1/11-tel und 1/7-tel des Sitzdurchmessers d0, liegt.

Eine gedachte Tangente 214 der Dichtkontur schließt in einem Krümmungsänderungspunkt 216 mit einer Stellachse 102 einen Winkel α im Bereich zwischen 40° und 52°, insbesondere in einem Bereich zwischen 44° und 50°, und insbesondere in einem Bereich zwischen 47° und 49°, ein. In einem Abschnitt 240 um den Krümmungsänderungspunkt 216 folgt der Dichtsteg 206 der Tangente 214, womit der Abschnitt 240 im Schnitt yz in einer gedachten Kegelstumpfmantelfläche mit der Stellachse 102 als Kegelachse liegt.

Der konvex gekrümmte Anlageabschnitt 210 nimmt lotrecht zu der Stellachse 102 zwischen 1/20-tel und 1/5-tel des Sitzdurchmessers d0 des Dichtstegs 206, insbesondere zwischen 1/15-tel und 1/6-tel des Sitzdurchmessers d0, ein.

Der Dichtsteg 206 umfasst wenigstens einen in dem Längsschnitt yz des Dichtstegs 206 konkav gewölbten Anlageabschnitt 212. Ein innerer Bereich der Dichtkontur des Dichtstegs 206, welcher den wenigstens einen konkav gewölbten Anlageabschnitt 212 umfasst, ist von den zwei konvex gekrümmten Anlageabschnitten 210 umgeben. Der konkave Anlageabschnitt 212 schließt sich nach innen und in Richtung der Stellachse 102 an den jeweiligen konvex gewölbten Anlageabschnitt 210 an. Vorliegend umfasst der Dichtsteg 206 einen zentralen, eben ausgebildeten Plateauabschnitt 224. Der Plateauabschnitt 224 kann auch entfallen, womit sich ein einziger konkav gewölbter Anlageabschnitt 212 ergibt. Der konkav gewölbte Abschnitt 212 ist geringer gekrümmt als der konvex gewölbte Abschnitt 210.

Ein Krümmungsmittelpunkt 218 des konvex gewölbten Abschnitts 210 und ein Krümmungsmittelpunkt 220 des konkav gewölbten Abschnitts 212 liegen auf einer gedachten gemeinsamen Linie 222. Die Linie 222 schließt mit der Stellachse 102 einen Winkel β in einem Bereich zwischen 45° und 70°, insbesondere in einem Bereich zwischen 65° und 50°, ein.

Der konkave Anlageabschnitt 212 folgt zumindest abschnittsweise einer Kreisbahn mit einem zweiten Radius R12, wobei der erste Radius R10 größer als ein Sechstel des zweiten Radius R12 und kleiner als die Hälfte des zweiten Radius R12 ist, insbesondere größer als ein Viertel des zweiten Radius R12 und kleiner als die Hälfte des zweiten Radius R12 ist.

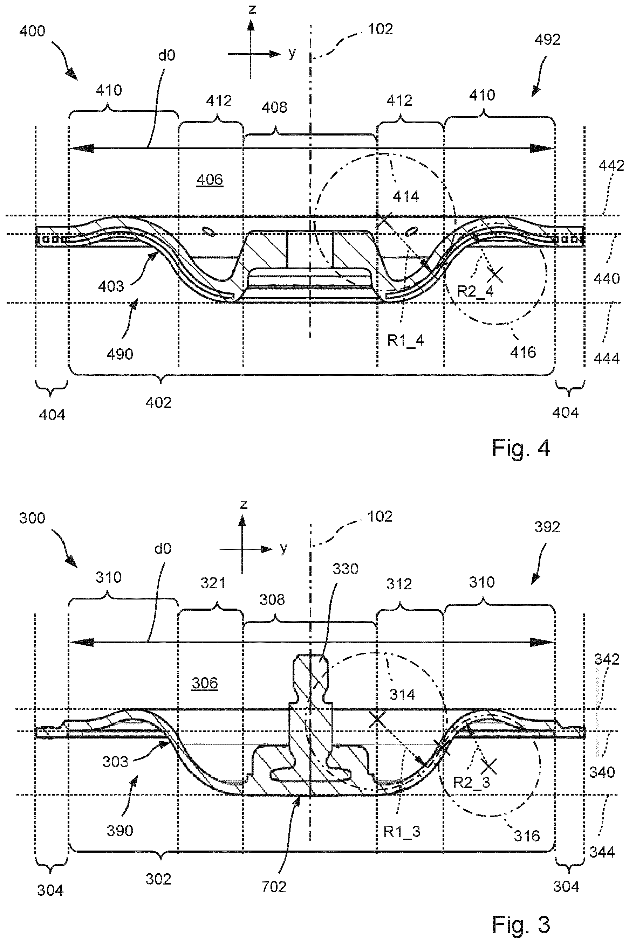

Figur 3 zeigt einen Längsschnitt der Membran 300 und Figur 4 zeigt einen Längsschnitt der Membran 400. Im Folgenden werden beide Membrane 400 gemeinsam beschrieben.

Die Membran 300, 400 umfasst den Funktionsbereich 302, 402 und einen den Funktionsbereich 302, 402 umgebenden Befestigungsabschnitt 304, 404. Die Membran 300, 400 ist in einem entspannten Zustand gezeigt, was bedeutet, dass auf die Membran 300, 400 keine Kräfte ausgeübt werden. Insbesondere ist die Membran 300, 400 im gezeigten entspannten Zustand nicht in einem Ventil eingespannt oder mit einem Antrieb verbunden.

Der Funktionsbereich 302, 402 umfasst in dem entspannten Zustand 306, 406: Einen zentralen Abschnitt 308, 408, welcher auf der Nassseite 390, 490 der Membran 300, 400 hervorsteht; einen lateralen Abschnitt 310, 410, welcher auf einer Trockenseite 392, 492 der Membran 300, 400 hervorsteht, wobei der laterale Abschnitt 310, 410 wenigstens abschnittsweise in Richtung der Trockenseite 392, 492 der Membran 300, 400 gewölbt ist; und einen zwischen dem zentralen Abschnitt 308, 408 und dem lateralen Abschnitt 310, 410 angeordneten Zwischenabschnitt 312, 412, welcher wenigstens abschnittsweise in Richtung der Nassseite 390, 490 der Membran 300, 400 gewölbt ist.

Eine erste Lotebene 340, 440 der Stellachse 102 verläuft durch den Befestigungsabschnitt 304, 404. Eine zweite Lotebene 342, 442 der Stellachse begrenzt den lateralen Abschnitt 310, 410 von außen. Eine dritte Lotebene 344, 444 begrenzt den zentralen Abschnitt 308, 408 von außen. Die erste Lotebene 340, 440 befindet sich zwischen der zweiten Lotebene 342, 442 und der dritten Lotebene 344, 444.

Eine Membrandicke bzw. Wandstärke der Membran 300, 400 nimmt in einem Bereich umfassend den Zwischenabschnitt 312, 412 und den lateralen Abschnitt 310, 410 in Richtung des Befestigungsabschnitts 304, 404 wenigstens abschnittsweise ab. In einem weiteren Beispiel ist die Membrandicke bzw. Wandstärke der Membran 300, 400 in dem Bereich umfassend den Zwischenabschnitt 312, 412 und den lateralen Abschnitt 310, 410 im Wesentlichen konstant gewählt.

Der Zwischenabschnitt 312, 412 folgt zumindest abschnittsweise einem Kreisbogen 314, 414 mit einem ersten Radius R1_3, R1_4. Der laterale Abschnitt 310, 410 folgt zumindest abschnittsweise einem Kreisbogen 316, 416 mit einem zweiten Radius R2_3, R2_4. Der zweite Radius R2_3, R2_4 ist kleiner gewählt als der erste Radius R1_3, R1_4. Insbesondere liegt ein Verhältnis des zweiten Radius R2_3, R2_4 zu dem ersten Radius R1_3, R1_4 zwischen 0,40 und 0,85, insbesondere zwischen 0,55 und 0,75. Der erste Radius R1_3, R1_4 liegt in einem Bereich größer 1/10-tel eines Sitzdurchmessers d0, insbesondere in einem Bereich zwischen 1/17-tel und 1/5-tel des Sitzdurchmessers d0, und insbesondere in einem Bereich zwischen 1/11-tel und 1/7-tel des Sitzdurchmessers d0.

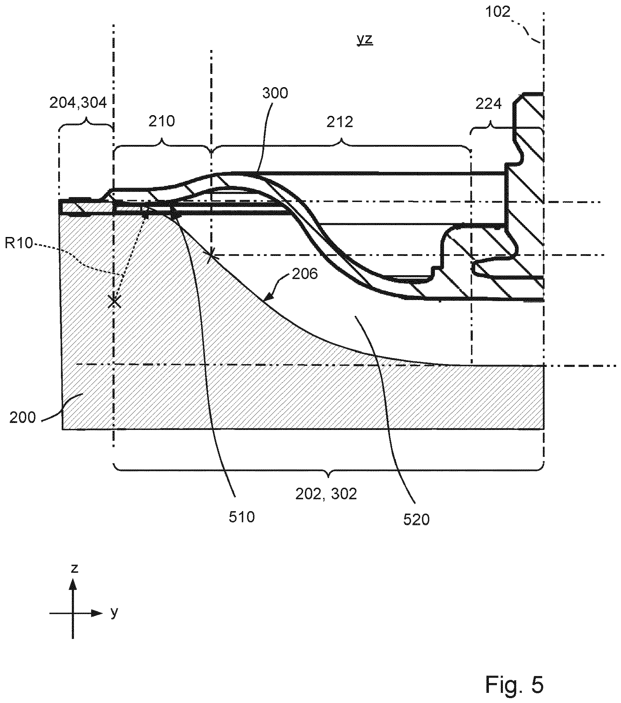

Figur 5 zeigt in einem schematischen Schnitt die Membran 300 und den zugeordneten Ventilkörper 200. Die Befestigungsabschnitte 204 und 304 liegen fluiddicht aneinander an. Die Membran 300 ist schematisch in dem entspannten Zustand gezeigt. Es ergibt sich ein Öffnungsquerschnitt 520 zwischen der Membran 300 und dem Dichtsteg 206, durch den Prozessfluid fließen kann.

Wird die Membran 300 auf den Dichtsteg 206 aufgedrückt, so ergibt sich eine in diesem Schließzustand der Membran 300 ausgebildete Schließkontur des Funktionsbereichs 302 mit zwei in dem Längsschnitt yz des Funktionsbereichs 302 konkav gewölbten Anlageabschnitten 510, welche sich jeweils nach innen gewandt an den Befestigungsabschnitt 304 anschließen. Die Schließkontur des Funktionsbereichs 302 bezieht sich auf eine nassseitige Oberfläche der Membran 300, und zwar in einem Längsschnitt xy des zugeordneten Dichtstegs 206. In dem geschlossenen Zustand des Membranventils 100 liegen die konkav gewölbten Anlageabschnitte 510 der Membran 300 jeweils an dem zugeordneten konvex gewölbten Anlageabschnitt 210 des Ventilkörpers 200 an.

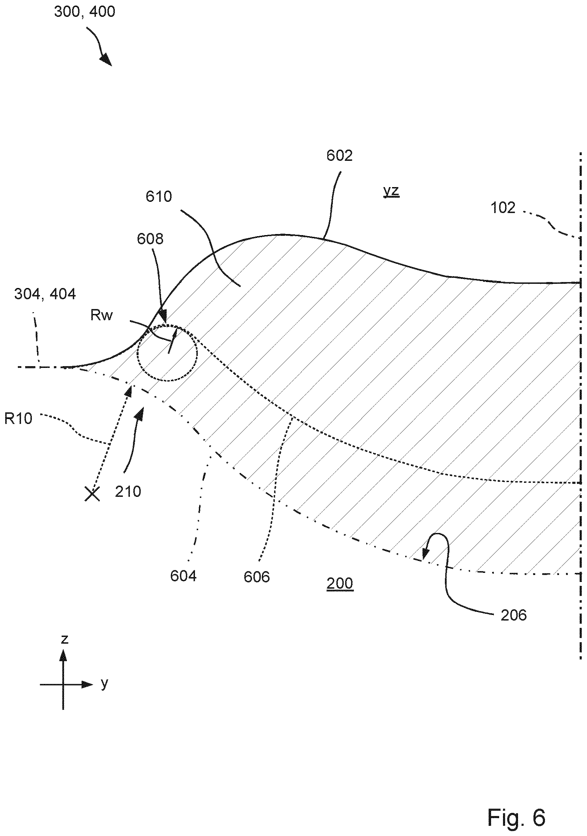

Eine Länge einer Längsschnittkontur des Funktionsbereichs 302, 402 der Membran 300, 400 aus Figur 3 oder 4 ist kürzer, insbesondere zwischen 1-4% kürzer, insbesondere zwischen 2-3% kürzer, als eine Längsschnittkontur des Dichtstegs 206 des Ventilkörpers 200. Die Längsschnittkontur bezieht sich auf eine nassseitige Oberfläche der Membran 300, 400, und zwar im Längsschnitt des zugeordneten Dichtstegs 206. Figur 6 zeigt verschiedene Stellungen der Membran in schematischer Form im Schnitt yz. Der in Figur 6 nicht gezeigte entspannte Zustand 306, 406 der Membran 300, 400 aus Figur 3 bzw. 5 entspricht einer unbelasteten Zwischenstellung der Membran 300, 400, welche sich zwischen einer geöffneten Stellung 602 und einer geschlossenen Stellung 604 befindet. Ein maximaler Öffnungsquerschnitt 610 ergibt sich zwischen der geöffneten Stellung 602 und der geschlossen Stellung 604. Die gezeigte Stellung 606 der Membran 300, 400 stellt sich dann ein, wenn die Membran 300, 400 vom Dichtsteg 206 abgehoben und in Richtung der geöffneten Stellung 602 bewegt wird. Durch die in dieser Beschreibung ausgeführte Konfiguration der Membran 300, 400 stellt sich in der Stellung 606 in einem Schnitt, welcher die Stellachse 102 umfasst, eine laterale Wölbung 608 ein. Die Wölbung 608 öffnet sich zur jeweiligen Nassseite hin. Die Wölbung 608 umfasst einen minimalen Walkradius Rw, der beim Durchlaufen der Stellungen ausgehend von der Stellung 604 hin zur Stellung 602, nicht unterschritten wird.

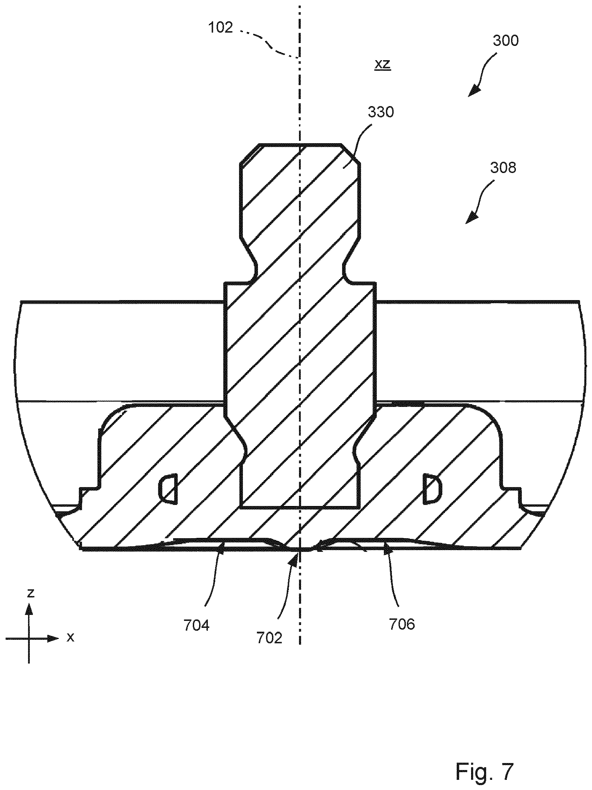

Figur 7 zeigt einen schematischen Querschnitt des zentralen Abschnitts der Membran 300. Der zentrale Abschnitt 308 umfasst einen nassseitigen Dichtsteg 702. Der Dichtsteg 702 ist in einem Schnitt xz lotrecht zum Verlauf des Dichtstegs 702 von zwei Ausnehmungen 704, 706 umgeben.

In einem alternativen Beispiel entfallen der Dichtsteg 702 und die entsprechenden Ausnehmungen 704, 706. Eine nassseitige Oberfläche des zentralen Abschnitts 308 ist in diesem Beispiel rotationssymmetrisch zur Stellachse 108 ausgebildet.

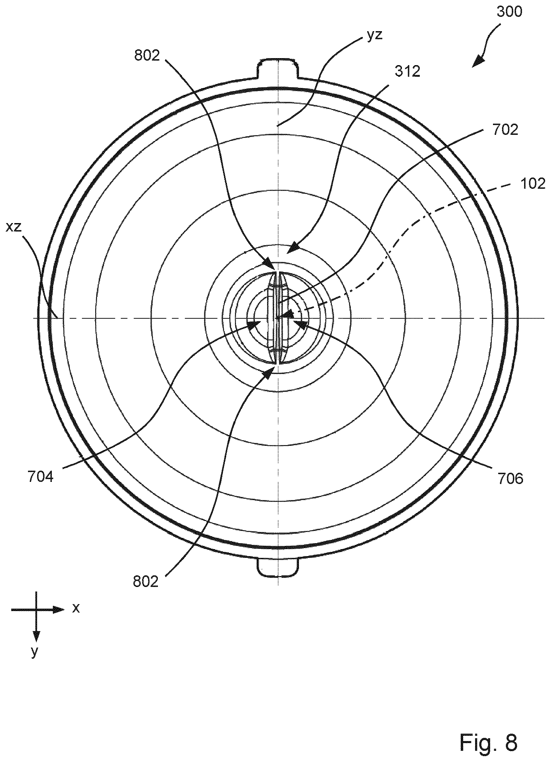

Figur 8 zeigt eine Sicht auf die Nassseite der Membran 300 in z-Richtung. Die Membran 300 umfasst eine nassseitige Oberflächenkontur des Zwischenabschnitts 312, welche rotationssymmetrisch zu der Stellachse 102 ausgebildet ist. Der Dichtsteg 702 geht in Bereichen 802 und 804 stetig in die rotationssymmetrisch ausgebildete nassseitige Oberflächenkontur des Zwischenabschnitts 312 über.

## Patentansprüche

1. Ein Ventilkörper (200) für ein Membranventil (100), wobei der Ventilkörper (200) einen Befestigungsabschnitt (204) für eine Membran (300; 400) umfasst, wobei innerhalb des Befestigungsabschnitts (204) ein Dichtsteg (206) zum Zusammenwirken mit einem Funktionsbereich (302; 402) der Membran (300; 400) angeordnet ist, wobei eine Dichtkontur des Dichtstegs (206) zwei in einem Längsschnitt (yz) des Dichtstegs (206) konvex gewölbte Anlageabschnitte (210) umfasst, welche sich jeweils nach innen gewandt an den Befestigungsabschnitt (204) anschließen, **dadurch gekennzeichnet, dass** eine gedachte Tangente (214) der Dichtkontur in einem Krümmungsänderungspunkt (216) mit einer Stellachse (102) einen Winkel (α) im Bereich zwischen 40° und 52° einschließt.

2. Der Ventilkörper (200) gemäß dem Anspruch 1, wobei der konvex gewölbte Anlageabschnitt (210) zumindest abschnittsweise einem Kreisbogen, dessen Radius (R10) in einem Bereich größer 1/10-tel eines Sitzdurchmessers (d0), insbesondere in einem Bereich zwischen 1/17-tel und 1/5-tel des Sitzdurchmessers (d0), und insbesondere in einem Bereich zwischen 1/11-tel und 1/7-tel des Sitzdurchmessers (d0), liegt, folgt.

3. Der Ventilkörper (200) gemäß dem Anspruch 1 oder 2, wobei die gedachte Tangente (214) der Dichtkontur in einem Krümmungsänderungspunkt (216) mit der Stellachse (102) einen Winkel (α) in einem Bereich zwischen 44° und 50°, und insbesondere in einem Bereich zwischen 47° und 49°, einschließt.

4. Der Ventilkörper (200) gemäß einem der vorigen Ansprüche 1 bis 3, wobei der konvex gekrümmte Anlageabschnitt (210) lotrecht zu einer bzw. der Stellachse (102) zwischen 1/20-tel und 1/5-tel des Sitzdurchmessers (d0) des Dichtstegs (206), insbesondere zwischen 1/15-tel und 1/6-tel des Sitzdurchmessers (d0), einnimmt.

5. Der Ventilkörper (200) gemäß einem der vorigen Ansprüche 1 bis 4, wobei wenigstens ein in dem Längsschnitt (yz) des Dichtstegs (206) konkav gewölbter Anlageabschnitt (212) der Dichtkontur sich nach innen an den jeweiligen konvex gewölbten Anlageabschnitt (210) anschließt, wobei der konkav gewölbte Abschnitt (212) geringer gekrümmt ist als der konvex gewölbte Abschnitt (210).

6. Der Ventilkörper (200) gemäß dem Anspruch 5, wobei ein Krümmungsmittelpunkt (218) des konvex gewölbten Abschnitts (210) und ein Krümmungsmittelpunkt (220) des konkav gewölbten Abschnitts (212) auf einer gedachten gemeinsamen Linie (222) liegen, welche mit einer bzw. der Stellachse (102) einen Winkel (β) in einem Bereich zwischen 45° und 70°, insbesondere in einem Bereich zwischen 65° und 50°, einschließt.

7. Ein Membranventil (100) umfassend den Ventilkörper gemäß einem der Ansprüche 1 bis 6 und eine Membran (300; 400), die einen Befestigungsabschnitt (304; 404) umfasst, wobei innerhalb des Befestigungsabschnitts (304; 404) ein Funktionsbereich (302; 402) zum Zusammenwirken mit einem Dichtsteg (206) eines Ventilkörpers (200) angeordnet ist, wobei eine in einem Schließzustand der Membran (300;400) ausgebildete Schließkontur des Funktionsbereichs (302; 402) zwei in einem Längsschnitt (yz) des Funktionsbereichs (302; 402) konkav gewölbte Anlageabschnitte (510) umfasst, welche sich jeweils nach innen gewandt an den Befestigungsabschnitt (304; 404) anschließen, wobei eine gedachte Tangente (214) der Schließkontur in dem Schließzustand in einem Krümmungsänderungspunkt mit einer Stellachse (102) einen Winkel (α) im Bereich zwischen 40° und 52° einschließt.

8. Das Membranventil (100) gemäß dem Anspruch 7, wobei in einem geschlossenen Zustand des Membranventils (100) die konkav gewölbten Anlageabschnitte (510) der Membran (300) jeweils an dem zugeordneten konvex gewölbten Anlageabschnitt (210) des Ventilkörpers (200) anliegen.

## Claims

1. A valve body (200) for a diaphragm valve (100), the valve body (200) comprising a mounting portion (204) for a diaphragm (300; 400), wherein a sealing web (206) for co-operating with a functional region (302; 402) of the diaphragm (300; 400) is arranged within the mounting portion (204), wherein a sealing contour of the sealing web (206) comprises two abutment portions (210; 400) convexly curved in a longitudinal section (yz) of the sealing web (206); 400), wherein a sealing contour of the sealing web (206) comprises two contact portions (210) which are convexly curved in a longitudinal section (yz) of the sealing web (206) and which each adjoin the fastening portion (204) facing inwards, **characterised in that** an imaginary tangent (214) of the sealing contour encloses an angle (α) in the range between 40° and 52° at a point of change of curvature (216) with an adjusting axis (102).

2. The valve body (200) according to claim 1, wherein the convexly curved contact section (210) follows, at least in sections, an arc of a circle whose radius (Rl0) lies in a range greater than 1/10th of a seat diameter (d0), in particular in a range between 1/17th and 1/5th of the seat diameter (d0), and in particular in a range between 1/11th and 1/7th of the seat diameter (d0).

3. The valve body (200) according to claim 1 or 2, wherein the imaginary tangent (214) of the sealing contour forms an angle (α) in a range between 44° and 50°, and in particular in a range between 47° and 49°, with the setting axis (102) at a point of change of curvature (216) .

4. The valve body (200) according to one of the preceding claims 1 to 3, wherein the convexly curved contact portion (210) perpendicular to one or the actuating axis (102) occupies between 1/20th and 1/5th of the seat diameter (d0) of the sealing web (206), in particular between 1/15th and 1/6th of the seat diameter (d0).

5. The valve body (200) according to one of the preceding claims 1 to 4, wherein at least one contact section (212) of the sealing contour which is concavely curved in the longitudinal section (yz) of the sealing web (206) adjoins the respective convexly curved contact section (210) inwards, wherein the concavely curved section (212) is less curved than the convexly curved section (210).

6. The valve body (200) according to claim 5, wherein a centre of curvature (218) of the convexly curved portion (210) and a centre of curvature (220) of the concavely curved portion (212) lie on an imaginary common line (222), which forms an angle (β) with an or the actuating axis (102) in a range between 45° and 70°, in particular in a range between 65° and 50°.

7. A diaphragm valve (100) comprising the valve body (200) according to one of claims 1 to 6 and a diaphragm (300; 400) comprising a fastening portion (304; 404), wherein a functional region (302; 402) for co-operation with a sealing web (206) of a valve body (200) is arranged within the fastening portion (304; 404), wherein a closing contour of the functional region (302; 402) comprises two contact portions (510) which are concavely curved in a longitudinal section (yz) of the functional region (302; 402) and which each adjoin the fastening portion (304; 404) facing inwards, wherein an imaginary tangent (214) of the closing contour in the closed state encloses an angle (α) in the range between 40° and 52° at a point of change of curvature with an actuating axis (102) .

8. The diaphragm valve (100) according to claim 7, wherein in a closed state of the diaphragm valve (100) the concavely curved contact portions (510) of the diaphragm (300) each bear against the associated convexly curved contact portion (210) of the valve body (200).

## Revendications

1. Corps de soupape (200) pour une soupape à membrane (100), le corps de soupape (200) comprenant une section de fixation (204) pour une membrane (300; 400), une nervure d'étanchéité (206) étant prévue à l'intérieur de la section de fixation (204) pour coopérer avec une zone fonctionnelle (302; 402) de la membrane (300; 400), un contour d'étanchéité de la barrette d'étanchéité (206) comprenant deux sections d'appui (210) bombées de manière convexe dans une coupe longitudinale (yz) de la barrette d'étanchéité (206), qui se raccordent chacune à la section de fixation (204) en étant tournées vers l'intérieur, **caractérisé en ce qu'**une tangente imaginaire (214) du contour d'étanchéité forme, en un point de changement de courbure (216), avec un axe de réglage (102), un angle (α) compris entre 40° et 52°.

2. Le corps de soupape (200) selon la revendication 1, dans lequel la section d'appui (210) bombée de manière convexe suit au moins par sections un arc de cercle dont le rayon (Rl0) se situe dans une plage supérieure à 1/10ème d'un diamètre de siège (d0), en particulier dans une plage comprise entre 1/17ème et 1/5ème du diamètre de siège (d0), et en particulier dans une plage comprise entre 1/11ème et 1/7ème du diamètre de siège (d0).

3. Le corps de soupape (200) selon la revendication 1 ou 2, dans lequel la tangente imaginaire (214) du contour d'étanchéité en un point de changement de courbure (216) forme avec l'axe de réglage (102) un angle (α) dans une plage comprise entre 44° et 50°, et en particulier dans une plage comprise entre 47° et 49°.

4. Le corps de vanne (200) selon l'une quelconque des revendications 1 à 3 précédentes, dans lequel la portion d'appui (210) à courbure convexe occupe, à l'aplomb de l'un ou l'autre des axes de réglage (102), entre 1/20ème et 1/5ème du diamètre de siège (d0) de la barrette d'étanchéité (206), notamment entre 1/15ème et 1/6ème du diamètre de siège (d0).

5. Le corps de soupape (200) selon l'une des revendications précédentes 1 à 4, dans lequel au moins une portion d'appui (212) du contour d'étanchéité, bombée de manière concave dans la coupe longitudinale (yz) de la barrette d'étanchéité (206), se raccorde vers l'intérieur à la portion d'appui (210) bombée de manière convexe respective, la portion bombée de manière concave (212) étant moins courbée que la portion bombée de manière convexe (210).

6. Le corps de soupape (200) selon la revendication 5, dans lequel un centre de courbure (218) de la section bombée convexe (210) et un centre de courbure (220) de la section bombée concave (212) se trouvent sur une ligne commune imaginaire (222) qui forme avec un ou l'axe de réglage (102) un angle (β) dans une plage comprise entre 45° et 70°, en particulier dans une plage comprise entre 65° et 50°.

7. Vanne à membrane (100) comprenant le corps de vanne (200) selon l'une des revendications 1 à 6 et une membrane (300; 400) qui comprend une partie de fixation (304; 404), une zone fonctionnelle (302; 402) destinée à coopérer avec une nervure d'étanchéité (206) d'un corps de vanne (200) étant disposée à l'intérieur de la partie de fixation (304; 404), un contour de fermeture de la zone fonctionnelle (302; 402) formé dans un état de fermeture de la membrane (300; 400) comprenant comprend deux parties de contact (510) qui sont concavement incurvées dans une section longitudinale (yz) de la région fonctionnelle (302; 402) et qui jouxtent chacune la partie de fixation (304; 404) tournée vers l'intérieur, une tangente imaginaire (214) du contour de fermeture dans l'état de fermeture formant un angle (α) dans la plage comprise entre 40° et 52° en un point de changement de courbure avec un axe de réglage (102).

8. La vanne à membrane (100) selon la revendication 7, dans laquelle, dans un état fermé de la vanne à membrane (100), les parties d'appui concaves (510) de la membrane (300) s'appuient chacune sur la partie d'appui convexe associée (210) du corps de vanne (200).
